# EUROPEAN PATENT APPLICATION

(11) **EP 3 046 113 A1**
(43) Date of publication of application: **20.07.2016**
(21) Application number: 14842959.0
(22) Date of filing: 29.08.2014
(51) Int. Cl.: H01B 1/02, B32B 5/16, H01L 21/301, B82Y 40/00, B82Y 20/00

(54) **MESH-LIKE MICRO- AND NANOSTRUCTURE AND METHOD FOR PRODUCING SAME**

(30) Priority: 09.09.2013 RU 2013141222
(71) Applicant: Limited Liability Company "Funktsionalnye Nanosistemy", Krasnoyarsk 662974 (RU); Khartov, Stanislav Viktorovich, Krasnoyarsk 660036 (RU)
(72) Inventor: SIMUNIN, Mikhail Maksimovich, Moscow 124617 (RU); VORONIN, Anton Sergeevich, Krasnoyarsk 660077 (RU); KARPOVA, Darina Valerevna, Shushenskij r-n Krasnoyarskij kraj 662733 (RU); SHIVERSKIJ, Aleksej Valerevich, Krasnoyarsk 660041 (RU); FADEEV, Yurij Vladimirovich, Zelenogorsk 663690 (RU)
(74) Representative: Zimmermann & Partner Patentanwälte mbB
(86) International application number: PCT/RU2014/000651
(87) International publication number: WO 2015/034398

(57) **Abstract**

The claimed invention relates to micro- and nanostructured coatings applied in various areas and to the method for producing same. In one of the embodiments, described is a mesh micro and nanostructure comprising a conductive or insulating layer implemented as a unified lace structure with the herein mentioned lace structure corresponding to the geometry of the cracks formed in the layer of a material used a template when forming the aforesaid mesh micro- and nanostructure. Also provided is a method for producing the said mesh and nanostructure comprising: forming a layer of a material on the surface of a substrate wherein upon occurrence of a predetermined chemical or a physical reaction, cracks are formed; implementing the formation of the cracks in the said layer using the said chemical or physical reaction; using the aforesaid layer of the material broken into the clusters as a template to define a geometry of the aforesaid micro- and nanostructure.

The aforesaid technical solution provides the solution of the problem of creating the aforesaid micro- and nanostructure and the method for producing same based on the self-organization processes which would allow avoiding the costly methods of lithography for creating the aforesaid micro- and nanostructured coatings used in a number of practical applications comprising the production of optically transparent conductive coatings.

## Description

The disclosed group of inventions relates in general to micro- and nanostructured coatings, such as transparent conductive coatings, and, more specifically, optically transparent conductive coatings, light-absorbing and light-converting layers for optical and photovoltaic devices, self-cleaning surfaces, biomimetic materials, selective and base layers of membranes, catalysts and the like, as well as methods for producing same.

There is an increasing market demand for micro- and nano-structured coatings, suitable to be formed on large surfaces in an efficient and cost-effective manner. The aforesaid coatings are capable of being utilized as transparent conductive coatings, specifically optically transparent conductive coatings described in Hu, L. B., Wu, H. & Cui, Y., Mater. Res. Soc. Bull. 36, 760-765 (2011), light-absorbing and light-converting layers for optical and photovoltaic devices as described in Garnett E. and Yang P., 2010 Nano Lett. 10, 1082; Kang M. G., Xu T., Park H. J., Luo X. and Guo L. J., 2010. Adv. Mater. 22, 4378; Ahn S. W., Lee K. D., Kim J. S., Kim S. H., Park J. D., Lee S. H. and Yoon P. W., 2005 Nanotechnology 16, 1874; Kwak M. K., Kim T., Kim P., Lee H. H. and Suh K. Y., 2009 Small 5, 928; Chanda D., Shigeta K., Gupta S., Cain T., Carlson A., Mihi A., Baca A. J., Bogart G. R., Braun P. and Rogers J. A., 2011 Nature Nanotechnol. 6, 402; Shalaev V. M., 2007 Nature Photon. 1, 41, self-cleaning surfaces described in Jeong H. E., Kwak M. K., Park C. I. and Suh K. Y., 2009 J. Colloid Interface Sci. 339, 202; Lau K. K. S., Bico J., Teo K. B. K., Chhowalla M., Amaratunga G. A. J., Milne W. I., McKinley G. H. and Gleason K. K., 2003 Nano Lett. 3, 1701, biomimetic materials described in Kwak M. K., Pang C., Jeong H. E., Kim H. N., Yoon H., Jung H. S. and Suh K. Y., 2011 Adv. Funct. Mater. 21, 3606, as well as selective and base layers of membranes as described, for example, in Patent RU 2389536 IPC B 01 D 71/00 published in 20.05.2010, all of the above cited references being incorporated herein by reference.

There exist a number of conventional techniques for creating micro- and nano-structured coatings based on the methodologies of optical and imprint lithography, described, for example, in Moon Kyu Kwak, Jong G Ok, Jae Yong Lee et al., Nanotechnology 23 (2012), 344008 (6pp); Ahn S. H. and Guo L. J., 2008 Adv. Mater. 20, 2044; Ahn S. H., Kim J. S. and Guo L., 2007 J. Vac. Sci. Technol. B 25, 2388; Henzie J., Barton J. E., Stender C. L. and Odom T. W., 2006 Acc. Chem. Res. 39, 249; Lee T. W., Jeon S., Maria J., Zaumseil J., Hsu J. W. P. and Rogers J. A., 2005 Adv. Funct. Mater. 15, 1435; Rogers J. A., Paul K. E., Jackman R. J. and Whitesides G. M., 1997 Appl. Phys. Lett. 70, 2658, all of which are incorporated herein by reference. However, the aforesaid conventional techniques generally fail to achieve the desired high output as well as cost efficiency, which are both necessary for the industrial-scale applications of the micro- and nano-structured coatings.

Therefore, certain coatings such as optically transparent conductive coatings are at present produced using alternative techniques. The conductive coatings having optical transparency as well as transparency in other spectral ranges are of high industrial significance. They find applications, for example, in manufacturing such products as electrically heated and electrochromic glass, information display panels, including touch sensitive displays (touch screens), electrodes for organic light-emitting diodes (OLED), electronic paper, solar cells, various optoelectronic devices, substrates for electrically-stimulated growth of living cells, devices for protection against static electricity as well as electromagnetic field shielding etc.

As would be appreciated by persons of ordinary skill in the art, for transparent conductive coatings, the important technical parameters include the surface resistivity and transmittance. A number of industrial applications make significant the following additional technical parameters of the coating: the transparency spectrum (the transparency dependence on the wavelength), the chemical resistance of the coating, its mechanical flexibility and resistance to periodic mechanical deformations, a range of materials for the substrates suitable for the coating production from the viewpoint of technological process, suitable substrate geometry and sizes. The most important economic parameter is the production cost of an area unit of the transparent coating.

The conventional technology includes a number of solutions, meeting, to varying extent, the requirements to the aforesaid transparency parameters of the conductive coatings. However, each of the available conventional solutions has substantial drawbacks.

At the present time, the most commonly used coatings are coatings based on conductive metal oxides. Specifically, coatings based on indium-tin oxide (ITO), described, for example, in British Patent GB2361245 and Korean patent application KR20130027991, both incorporated herein by reference, have become widely used. The main drawbacks of this type of coating include relatively high production cost, which is expected to increase in the future (indium resources being exhaustible), stringent requirements to the suitable substrates (due to the specifics of the coating production process), significant loss of transparency in infra-red IR spectrum, as well as low mechanical flexibility and elasticity. Among the advantages of the described solution is a high optical transparency to surface resistance ratio, which is about 10 Ohm/square at 90% transmittance.

Recently, alternative processes for producing transparent conductive coatings have increasingly been developed, and specifically, a process that uses as a coating a system of nanowires (conductive nanowires with a high aspect ratio; a specific case of nanorods which are also nano-objects with a high aspect ratio but may be non-conductive). One of the most common implementations of the aforesaid approach involves using single-walled carbon nanotubes as nanowires as described, for example, in Zhang, M. et al. Science 309, 1215-1219 (2005); Hecht, D. S., Hu, L. B. & Irvin, G., Adv. Mater. 23, 1482-1513 (2011), incorporated herein by reference. In the framework of the aforesaid approach, carbon nanotubes are deposited on a substrate using various deposition techniques (exemplary techniques include deposition from a colloid, dry deposition and the like) or grown on a substrate by gas-phase deposition. The advantages of the coatings based on carbon nanotubes generally include mechanical flexibility of the resulting coatings, optical transparency retained in the IR spectrum, increased chemical resistance, as well as a wider range of suitable substrates that could be used for coatings production. However, there are also substantial drawbacks. High optical transparency can only be achieved by coatings based on single-walled carbon nanotubes and their bundles, which, in view of the current market price of the materials for single-walled nanotubes, results in a relatively high production cost of the coatings of this type. Moreover, the state-of-the-art coatings based on carbon nanotubes have a relatively high surface resistance - from 100 Ohm/square and higher (see, for example, A. Kaskela, A.G. Nasibulin, M.Y. Timmermans et al., Nano Lett. 2010, 10, 4349-4355, incorporated herein by reference) at the transparency level of 90%, while the resistance of the coatings based on ITO at the same transparency level can be lower than 10 Ohm/square. To reduce the surface resistance, manufacturing techniques involving combining carbon nanotubes with a conductive polymer, conductive nanoparticles, graphene islands and similar materials are used, but in general, the resistance parameters of the aforesaid coatings still do not achieve the levels of those based on ITO.

Recently, another direction of the technology of transparent conductive coatings based on nanowires is being developed, namely - coatings based on the system of metal nanowires of a particular geometry, as described, for example, in H. Wu, D. Kong, Z. Ruan, Nature nanotechnology, 10.1038/NNANO.2013.84; De, S. et al., ACS Nano 3, 1767-1774 (2009); Garnett, E. C. et al., Nature Mater. 11, 241-249 (2012) and U.S. patent application publication US2009129004, incorporated herein by reference. As would be appreciated by persons of ordinary skill in the art, metal micro-and conductive nanowires have a band structure similar to multi-walled CNT and the mechanism of the transparency of the resulting coating is based on the presence of elongated empty windows between the conductors (while a layer of single-walled CNTs tends to almost completely fill the surface and is transparent solely due to a unique electronic structure of a single-walled CNT). In contrast to the single-walled CNTs, metal conductors do absorb the incident light, however, the averaged transparency parameters can be rather high (especially, taking into account the effect of the light diffraction on the conductors, whose contribution increases when the conductor width approaches 1.0-0.3 µm).

The class of coatings described herein has a high commercialization potential and capability of providing considerable advantages as compared to other types of coatings. For example, in the paper H. Wu, D. Kong, Z. Ruan, Nature nanotechnology, 10.1038/NNANO.2013.84, incorporated herein by reference, it was shown that coatings based on the system of metal nanowires could provide the surface resistance up to 2 Ohm/square at a transparency of 90%, with the coatings being characterized, unlike ITO, by high mechanical flexibility and exceptionally flat spectral characteristic, allowing the application of the widest range of substrates. The main drawback of the coatings based on metal nanowires is their relatively high price. For example, a production process for a coating described in paper H. Wu, D. Kong, Z. Ruan, Nature nanotechnology, 10.1038/NNANO.2013.84, incorporated herein by reference, involves formation of a suspended template from a polymer nanofiber by electrospinning, followed by vacuum evaporation on a suspended system of nanofibers of a metal layer, the transfer of the suspended system to the target surface, and etching of the polymer fiber while retaining the metallic shell. As the result, a system of elongated metal «nanogrooves», about 400 nm in width and about 80 nm in thickness, is formed on the substrate. The relatively high cost of the aforesaid coating production method is due to utilization of the processes of the metal vacuum evaporation and electrospinning (successive deposition onto a conductive frame of the system of suspended polymer nanofibers). Moreover, the acceptable dimensions of the frame, on which the suspended layer of nanofibers is formed, are limited to 6 inches.

A number of technical solutions should be noted which are based on obtaining a mesh of conductors resulting from the self-organization process occurring while nanoparticle-containing emulsions are being dried on the substrate. For example, in a U.S. patent application publication US2011003141, incorporated herein by reference, published on 06.01.2011, a method is disclosed for obtaining a micro-structured product, comprising the formation of a mesh of interconnected paths comprising nanoparticles surrounding the cells (clusters) of an arbitrary shape on the substrate surface, by aggregating (assembling) the aforesaid nanoparticles from the emulsion. A structure is also disclosed in the aforesaid patent document which includes a mesh of connected paths surrounding the cells of an arbitrary shape, with the connected paths consisting of at least partially- connected nanoparticles.

An international patent application WO2012170684, incorporated herein by reference, published on 13.12.2012 describes a method of obtaining a product is disclosed comprising a) the formation of a mixture containing a non-volatile component in a volatile liquid carrier, with the liquid carrier being an emulsion containing a continuous phase and second phase, with the latter being in the form of domains dispersed in the continuous phase 6) covering the surface of the initial substrate by the aforesaid mixture and drying the aforesaid mixture to eliminate the liquid carrier by applying an external force while covering and/or drying to provide the selective growth of the aforesaid dispersed domains relative to the continuous phase in the selected areas of the substrate, whereupon the aforesaid non-volatile component becomes self-organized and forms a coating in the form of a structure comprising paths surrounding the cells with regular disposition determined by the external force configuration on the substrate surface.

U.S. patent application publication US2011273085, incorporated herein by reference, published on 10.11.2011 describes a method of obtaining a product is disclosed comprising: a) the application of a liquid emulsion consisting of a continuous phase comprising conductive nanoparticles to the substrate surface; b) drying of the emulsion with further formation of a transparent conductive coating comprising the mesh structure of the paths formed of at least partially-connected nanoparticles surrounding the cells of a random shape which are mainly transparent for light, with, at least, a part of the aforesaid cells being filled with a filling material.

The aforesaid conventional solutions are based on a well known in the art process of self-organization, whose mechanism is different from the one proposed in the present invention and which involves the following steps. An emulsion is employed containing two non-miscible liquids (e.g. oil and water). One of the liquids is present in the other one in the form of domains (drops). When placed on the substrate these drops form a system of cells (clusters) surrounded by the first liquid. In the first liquid there are nanoparticles of solid matter as well, which can not penetrate into the second liquid (i.e. the cells remain free from nanoparticles). With the first liquid being dried out, the nanoparticles shrink into paths surrounding the drops of the second liquid. After removing the aforesaid drops there remains a mesh of paths formed from the particles stuck together.

The advantage of the aforesaid conventional solutions, as is the case of the present invention, includes using the self-organization process and the possibility to obtain a micro- or nano-structured surface in the form of a mesh of conductive paths using a simple method. However, the herein considered technical solutions have a number of drawbacks.
- The conductive paths are formed from the nanoparticles being, at least, partially in contact with each other. This results in the contribution of the contact resistances between individual nanoparticles into the total resistance of the obtained structure, decreasing the attainable resistance of the obtained mesh. It is for the same reason that the mechanical strength of the obtained mesh is decreased as compared to the case of a mesh implemented in the form of a single structure.
- The method involves the substantial constraints imposed on the range of acceptable materials of the nanoparticles employed because the aforesaid nanoparticles are assumed to be dispersed in a liquid carrier. For example, most metals are subject to oxidation when being in contact with liquids, which is especially relevant to nanoparticles, taking into account their high reactivity. Thus, only nanoparticles of noble metals or metals forming conductive oxides can retain the conductive properties. Moreover, the acceptable materials for nanoparticles are subject to constraints connected with their ability to form a stable colloid in the first liquid. The solution of this problem tends to be connected with using surfactants, which additionally makes the technology more complicated and gives rise to the problem of removing the surfactant wastes from nanoparticles in the final structure in order to improve the electrical contact of nanoparticles with each other. It is noteworthy that in any case the first liquid containing nanoparticles, when being evaporated, leaves a layer of admixtures on the nanoparticle surface which influences the nanoparticle contact. This is an indispensable property of the methods based on the liquid phase deposition of objects.
- The method imposes substantial constraints on the ratio of width to thickness of the paths, obtained upon the nanoparticle agglomeration since these paths are formed by capillary forces. Upon drying, the capillary surface of the first liquid shrinks and compresses the particles into paths. However, the capillary forces tend to minimize the difference between the width and thickness of a path (the law of the surface area minimization results in the rounding effect), thus, the degree of freedom over the arbitrary variation of the aforesaid ratio is lost, which, in its turn, can be important for a number of final applications (e.g. for optically transparent coatings). Moreover, the described herein effect of the surface area minimization by liquid phase results in rounding the angles of the obtained cells, which, specifically, results in the path thickening in the areas of their intersection, which can be significant for a number of final applications since the path irregularity in width increases. Specifically, this can cause the total transmittance of the structure to decrease (the path expansion occupies an additional area).
- The capillary nature of the formation mechanism of these structures also imposes constraints on the acceptable ratio of the cell size to the width of the paths between them, since with the cell size increasing (i.e. with the diameter increase of the initial drop of the second liquid) and the path width decreasing (i.e. with the width decrease of the initial layer of the first liquid), the probability increases that two neighboring drops of the second liquid would overcome the interlayer of the first liquid and merge, thus minimizing their free energy. Therefore, with cell size growth required, there arises the effect of increasing the width of the paths separating the cells. This constraint is an indispensable consequence of the capillary forces which account for the structure formation by means of the interaction of two liquid phases.

A conventional solution described in U.S. patent application publication US2009129004, incorporated herein by reference, involves a transparent conductor including a substrate, a conductive layer on the aforesaid substrate, with this layer including multiple conductive metal nanowires. This solution provides a combination of high electrical conductivity and optical transparency with a high mechanical flexibility. The achieved reliability of electrical conductivity is attributed to the fact that in case an individual conductive path is damaged, the presence of a large number of conductive paths (in the instant case - conductive nanowires and their chains) provides numerous possible paths for the current flow.

The common drawbacks of the aforesaid structure are the following:
- In general, the structure comprises contact resistances which are always present between individual conductive nanowires being a part of multiple conductive nanowires.
- Only conductive nanowires are employed. In other words, use is made of the objects, with one of their dimensions being lower than 100 nm. For a number of applications, from the engineering and technological points of view it would be appropriate to use the objects of the micro range.
- Only conductors are used. For a number of applications it would be more appropriate from the engineering and technological points of view to use a mesh of non-conductive paths. For example, a mesh of paths implemented from a polymer material, specifically, from the material possessing a certain biocompatibility (e.g. for the application in the field of biomimetic coatings).
- In general, the disposition of conductive nanowires on the substrate is random while it is required for a number of applications that a certain value and scatter of gaps between the conductive nanowires should be provided (i.e. the value and scatter of windows in the mesh). This may be relevant, for example, for optically transparent coatings, membranes, superhydrophobic (self-cleaning) materials, biomimetic coatings etc.

The conventional solutions also include a method of forming a transparent conductor including: the deposition of multiple metal conductive nanowires dispersed in a liquid on the substrate surface and the formation of a mesh of metal conductive nanowires on the substrate upon drying of the aforesaid liquid. The drawbacks of the aforesaid method are the following:
- The requirement for the preliminary synthesis of the metal conductive nanowires further dispersed in the aforesaid liquid. The procedure of the metal conductive nanowire synthesis itself is complicated from the technological point of view and, in general, is subject to various constraints (technological complexity, electrical conductivity constraints, the presence of defects or impurities in the obtained conductive nanowires, constraints on the aspect ratio of the conductive nanowires obtained, their entanglement etc.).
- The requirement for the conductive nanowire deposition on a liquid substrate. The aforesaid procedure is intimately associated with the effect of the conductive nanowire coagulation (entanglement), with the subsequent disturbance in the uniformity of the mesh formed. This fact also results in the complexity of controlling the average value of the gaps (windows) in the mesh.
- The mesh is formed from individual conductive nanowires, thus decreasing its total electrical conductivity, because the contact resistances formed at the contact areas of individual conductive nanowires with each other are additionally included in the circuit. This fact also leads to the decrease of the mechanical resistance of the mesh, which can be significant for some applications (e.g., in the case of using the mesh as a base or selective layer of a membrane).
- Liquid phase deposition tends to require the application of additional components in the colloid solution (in order to improve its stability), which after their deposition on the substrate act as foreign matter decreasing the conductivity of the mesh being formed (with regard to the growth of the contact resistance values) and its other exploitation parameters.

The claimed group of inventions is aimed at eliminating the above-described deficiencies of the conventional methods.

The technical result is furthermore achieved by the claimed group of inventions through creating a new method of forming micro- and nanostructure coatings and micro- and nanostructures providing the increased mechanical stability of the structure, increased electric conductivity (in the embodiments of the said invention), improved control of geometric parameters of the structure, and increased production effectiveness and application area.

In accordance with one aspect of the embodiments described herein, there is provided a method for producing a mesh structure, the method involving: forming a substantially uniform layer of a material on a surface of a substrate, wherein upon occurrence of a predetermined chemical or a physical reaction, the cracks are formed, allowing one to apply the aforesaid layer of the material broken into clusters as a template to define a geometry of the micro- and nanostructure.

In one or more embodiments, the layer of the material broken into clusters is used as a template to define a geometry of the mesh structure, the mesh structure being mechanically separate from the surface of the substrate.

In one or more embodiments, the layer of the material broken into clusters is used as a template to define a geometry of the mesh structure on the surface of the substrate or on a second surface of a second substrate.

In one or more embodiments, the method further involves forming a conductive or dielectric layer over the layer of the material broken into the clusters and subsequently completely or partially removing the layer of the material broken into the clusters.

In one or more embodiments, the conductive or dielectric layer is formed using a vacuum deposition or a deposition from a melt or a liquid or a gas phase deposition and wherein the layer of the material broken into the clusters is removed using etching or by thermal or mechanical action.

In one or more embodiments, the method further involves: forming a second layer of a liquid precursor or a melt over the layer of the material broken into the clusters; bringing the layer of the material broken into the clusters into a contact with the second layer, displacing an excess of the liquid precursor or melt, and transforming the liquid precursor into the mesh structure.

In one or more embodiments, the surface of the substrate is porous and wherein the porous surface of the substrate absorbs at least a portion of the liquid precursor or the melt.

In one or more embodiments, the liquid precursor comprises a solution of silver salts or a colloid of silver nanoparticles.

In one or more embodiments, the layer of the material comprises additional layers or materials affecting the deposition of the conductive or dielectric layer by blocking or hindering the deposition of the conductive or dielectric layer.

In one or more embodiments, the method involves performing a galvanic deposition of a conductive layer in the gaps separating the clusters in the layer of the material.

In one or more embodiments, the method involves establishing a mechanical contact of the substrate with the second substrate to transfer the template or the mesh structure onto the second substrate.

In one or more embodiments, the method involves depositing additional layers and subsequently forming a second layer of a second material of the mesh structure over or between the deposited additional layers.

In one or more embodiments, the mesh structure further includes a conductive or dielectric layer in a form of a uniform laced structure, wherein the uniform laced structure corresponds to a geometry of the gaps in the material broken into the clusters.

In one or more embodiments, the laced structure comprises a metal or a conductive metal oxide deposited from a melt, liquid or gaseous phase or by a vacuum deposition.

In one or more embodiments, the laced structure comprises a composite material comprising conductive nanoparticles or carbon nanotubes or conductive nanorods distributed in the template, specifically, in the template implemented from a conductive polymer.

In one or more embodiments, the laced structure is attached to the substrate and wherein the substrate is a porous or optically transparent.

In one or more embodiments, the laced structure is partially or completely separate from the substrate.

Additional aspects related to the invention will be set forth in part in the description which follows, and in part will be obvious from the description, or may be learned by practice of the invention. Aspects of the invention may be realized and attained by means of the elements and combinations of various elements and aspects particularly pointed out in the following detailed description and the appended claims.

It is to be understood that both the foregoing and the following descriptions are exemplary and explanatory only and are not intended to limit the claimed invention or application thereof in any manner whatsoever.

The accompanying drawings, which are incorporated in and constitute a part of this specification exemplify the embodiments of the present invention and, together with the description, serve to explain and illustrate principles of the inventive technique. Specifically:
Fig. 1 illustrates an exemplary structure layout (side view and top view) at different stages of its formation according to one of the embodiments of the invention.
Fig. 2 illustrates an exemplary structure layout (side view) at different stages of its formation according to the second example of the embodiment of the invention.

In one or more embodiments, the laced structures described herein are characterized by the geometry of the fractures formed in a layer of material used as a template. In one embodiment, such geometry includes a layer of material containing openings, with the size of the aforesaid openings being characterized by a predetermined average size. In one embodiment, the aforesaid template is obtained through the mechanism of self-organization of a layer of material, which is uniform in its thickness. In such a case, due to the aforesaid uniformity of the material layer, the resulting openings would be approximately of the same size.

It should be noted that for certain applications, such as an optical coating (specifically, an optically transparent coating) the presence of a certain degree of variation in the shape and dimensions of the coating elements can be a desirable result, in view of the fact that it eliminates the interference effect for certain wavelengths. The herein described properties of the laced structure geometry caused by the aforesaid criterion is also significant for the formation of the laced layer from a dielectric material, for example, for the application of the herein indicated material as a base or a selective layer of a membrane or as a biomimetic layer (a layer imitating a biological tissue). In the latter case the herein described criterion is especially relevant since it is due to the self-organization process, being the basis of the claimed invention, resulting in the separation of the uniform layer into clusters by the fractures that the geometry of the cluster array, to some extent, follows the geometry of an array of living cells, as described, for example, in T.A. Yakhno, V.G. Yakhno., Journal of technical physics, 2009, vol 79, issue. 8, p. 133-141, incorporated herein by reference. The herein described criterion also implies that the dimensions of the laced structure elements can vary in the range from as low as 100 nm to more than 100 µm, since, as is claimed, the herein described method of self-organization causes such a wide range of structuring. In the prototype model it is indicated that the structure comprises conductive nanowires (objects with one of their dimensions being lower than 100 nm), while the extension of the range of the acceptable geometric dimensions of the structure elements can be significant for certain practical applications of the structure (for example, for the case of a base or selective layer of a membrane or a biomimetic layer and superhydrophobic coatings etc.).

In one or more embodiments, the criterion of «comprising a conductive or dielectric layer» causes a possibility of building the structure using a wider range of materials than in the case of the prototype model, specifically, dielectric materials such as polymers, which increases the range of the practical application of the aforesaid structure.

In one or more embodiments, the criterion of «being implemented in the form of a unified laced structure» is caused by the fact that the problem of contact electrical resistances which is always present in the organization of a structure from "an array of conductors", is specifically eliminated, allowing one to increase the attainable structure conductivity. Moreover, for an array of conductors (or dielectric objects) the problem of rigidity of their mechanical contact is urgent which can be of significance for a number of applications, for example, for the case of the aforesaid layer being a base or selective layer of a membrane. The herein described criterion ensures the increase of the mechanical strength of the structure (the contact mark of two objects implemented from materials of the same type is mechanically less strong than the continuous transfer of the same geometry between the aforesaid objects).

In one or more embodiments, the described method generally enables the formation of a unified laced structure, eliminating the problem of the contact electric resistances which is always present in the organization of a structure from "nanoparticles" or "an array of conductive nanowires". This allows one to increase the attainable conductivity of the structure. In addition, for an array of conductors or nano-particles the problem of the rigidity of their mechanical contact very important, which can be of significance for a number of industrial applications.

In one or more embodiments, the described method dramatically expands the range of the acceptable materials usable in the production of the final laced structure. Using the template (the layer comprising fractures) formed within the framework of the aforesaid method it is possible to form the final laced structure almost from any material by the application of any of the existing deposition methods: vacuum deposition, deposition from the liquid or gaseous state, deposition from the melt etc.

In one or more embodiments, the described method dramatically increases the acceptable width to path thickness ratio in the unified laced structure. An additional degree of freedom appears, allowing one to vary the values of the aforesaid parameters, since the template formation stage wherein the fracture width is set (determines the path width of the laced structure) is not connected with the stage of the path formation by one of the deposition methods, wherein it is possible to independently set the path thickness from nanometer units up to the value not exceeding the thickness of the layer comprising fractures (up to tens or hundreds of micrometers).

In one or more embodiments, the described method dramatically increases the acceptable ratio of the cell (cluster) size to the width of the paths between them. Upon the fracture formation, in the layer subjected to the drying procedure or to a chemical or physical reaction the competition between the forces of the layer adhesion to the substrate and those of the mechanical layer contraction acts as a self-organization mechanism. Due to the aforesaid competition at a certain moment the division of the layer into a system of individual clusters separated by fractures becomes energetically profitable. The aforesaid self-organization process allows the wide-range regulation of the correlation between the fracture width and the cluster size by controlling the concentration of the chemical agent being evaporated in the layer, the layer thickness, the humidity and the composition of the medium, where the fracturing occurs, as well as other parameters.

It should be noted that after the primary fracturing due to the pre-set humidity or chemical composition of the medium, the clusters can again increase in size (specifically, they soak) and the formed fractures can be narrowed, as desired, down to the nanometer units and down to the complete cluster closure. Thus, the cluster sizes and the fracture widths may vary, in general, independently of each other within wide ranges. It should be noted that this effect cannot be achieved in the aforesaid conventional methods using a capillary self-organization mechanism and in the prototype model using the deposition of ready conductive nanowires (for example, the fractures less than 100 nm in width are attainable with the cluster length being more than 100µm.)

In accordance with one or more embodiments, there is provided a structure with a mesh geometry and a method for manufacturing same, which utilizes self-organized structures formed due to self-organization properties of various materials. The aforesaid method of producing the structure is based on the self-organization process, wherein as the result of increasing mechanical stresses in the material layer, the aforesaid layer, which is initially uniform, later forms individual clusters separated from each other by gaps (fractures). The increase of the mechanical stresses in the aforesaid material layer may result, for example, from a physical or chemical reaction, or their combination. One of the examples of a physical reaction is a process of drying the aforesaid uniform material layer, i.e. the removal of the liquid phase from the system (specifically, the removal of water or another liquid solvent) or the process of soaking of one of the components of the aforesaid material layer due to the absorption of another liquid component by the first one, or the processes of the contraction or expansion of the aforesaid layer.

In one or more embodiments, in the above-described processes, the amount of the aforesaid contraction or expansion of the uniform material layer is not the as the corresponding amount of contraction or expansion of the substrate (for example, due to the difference in the expansion coefficient, elasticity, elasticity coefficient or other physical parameters of the material layer and the substrate). In other words, the substrate and the material layer expand and contract with different expansion/contraction coefficients.

In one or more embodiments, the reactions of polymerization, decomposition, and the like, are examples of chemical reactions suitable for causing the material layer to fracture. In another embodiment, a chemical and a physical reaction occur simultaneously (for example, the polymerization reaction together with the evaporation of one of the components of the reaction products). The aforesaid processes of the fracture formation in the material layers are well known in the art. However, in most cases, they have been considered to be undesirable effects negatively affecting quality of materials or used for specifying quality parameters for physiological or industrial liquids, as described, for example, in T.A.Yakhno, V.G. Yakhno, Journal of technical physics, 2009, vol. 79, issue. 8, p. 133-141, incorporated herein by reference.

In one or more embodiments, the aforesaid self-organization process is utilized as the basis for a low cost template production method used for obtaining the final mesh micro- and nano-structure which may, in one exemplary embodiment, be used as a conductor. In various embodiments, by regulating such parameters as the chemical and physical composition of the layer, its thickness, viscosity and adhesion to the substrate, the concentration of a component participating in the chemical and physical reaction, the rate of the aforesaid physical or chemical reaction, temperature and pressure in the system, as well as by regulating the conditions of further treatment of the fractured layer, it is also possible to regulate within wide ranges such parameters as the average size and shape of the final clusters, the width and the shape of the fractures separating the clusters. Moreover, in various embodiments, depending on the above parameters, the fracture width may vary from less than 100nm to more than 100µm. The width of the paths of the resulting mesh structure may vary in significantly wider range than the range of variation of the widths of the primary fractures. For this purpose the fractured layer may be further treated, for example, using the exposure of the fractured layer to a corresponding liquid or gaseous phase, resulting in soaking (due to the physical and chemical mechanisms) of the material of the fractured layer, followed by the narrowing of the fractures down to their complete disappearance, or, e.g., by depositing additional layers, which, after the deposition of the target layer forming the final paths, are removed by one of the known in the art methods of etching (so called sacrificial layers) or enter into a chemical or physical reaction with the deposited target layer.

In one or more embodiments, the number of ways for using the template obtained by the aforesaid method for forming the final mesh structure is virtually unlimited. Such methods are well known in the field of technology of microelectronics and in the related arts. A specific case is the deposition of the target layer on the substrate comprising the template described herein using one of techniques known in the art, followed by the subsequent removal of the template clusters and ensuring that the target layer remains only in the area of the fractures following their geometry. One of the embodiments involves selectively depositing a material into the fracture areas. For this purpose, use can be made of the method of galvanic deposition or deposition by means of electrophoresis on a conductive substrate covered by dielectric clusters separated by fractures.

As still another example, the preliminary functionalization of the surface of the layer capable of forming fractures, this functionalization being different for the fracture surfaces and the cluster surfaces after the fracture formation, followed by a reaction of deposition which is sensitive to the functionalization (for example, sensitive to the surface PH-factor or the presence of certain molecules on the surface). As still another example, the deposition and modification of additional (in, particular, sacrificial) layers to change the fracture width and geometry or to create suspended layers in the final structure (the suspended layers can be formed by removing the sacrificial layer). As still another example, the formation of a liquid precursor layer or a melt layer over the template formed by the method described herein (i.e. over the layer comprising fractures), followed by a mechanical contact of the substrate with the template with another substrate so that the excess of the liquid precursor of the melt should be displaced, with the precursor or the melt remaining mainly in the area of the fractures. Further a procedure is implemented for the transformation of the aforesaid liquid precursor into the target material (for example, the deposition of the target material from the aforesaid liquid precursor or heating the latter one), or the procedure of obtaining the target material by solidifying the aforesaid melt. In such a case, the target material forms paths both on the first and second substrates.

Depending on the ratio of the forces of adhesion of the target material to the substrates, upon breaking the contact of the second substrate with the first one, the paths from the target material can remain either on the first or on the second substrate or on both substrates. The second substrate can, in this case, be also used as a final product with an advantage that, in the specific case, there is no necessity in removing the template since upon breaking the mechanical contact between the substrates the template, in the aforesaid specific case, remains on the first substrate. In the general case, depending on the ratio of the forces of adhesion of the template to the aforesaid substrates, upon breaking the mechanical contact of the second substrate with the first one, the template can also remain either on the first or on the second substrate or on both substrates. It is worth noting that this is the basic principle for one of the method for the mechanical template removal wherein the template clusters are caught by one of the substrates being in mechanical contact while the other substrate retains/obtains only the paths of the final laced structure. Any method resulting in the appearance of mechanical stresses directed towards the separation of the clusters from the aforesaid substrate can be considered to be a mechanical method of the template removal. One of the examples is the system heating, wherein the template clusters tend to separate from the substrate due to the difference of the expansion ratio of the substrate and template materials.

An alternative to the mechanical template removal is its etching by any method known in the art, as well as by dissolving, washing-off or other similar processes. In the general case, it is possible not to remove the template but to use it in the final product along with the paths of the laced structure. For example, if the template is implemented from a transparent material, then for obtaining a transparent conductive structure the template removal may not be necessary. It should be noted that in this case it may be required to introduce an additional layer into the system, with the layer having the refraction index corresponding to the refraction index of the template material (the so-called immersion layer) to eliminate interference effects on the template clusters. The aforesaid first substrate can be made of a porous material capable of comprising a part of the precursor or the melt. The porous substrate, soaked with the precursor or the melt, with a template of the herein mentioned type deposited on the aforesaid substrate can act as an analog of a jet printer head whose spray jets are formed by the cracks between the clusters of the template covering the porous surface.

The technological process of the formation of the micro- and nano-structured coating in this case can be reduced to the application of the aforesaid porous structure with the template to the surface being treated, followed by pressing out a part of the precursor or melt through the template. In this embodiment of the invention there is an analogy with the technique of imprint lithography, the only peculiarity being the use of the self-organized template. Here, the precursor is understood to be a material participating in the reaction resulting in the formation of the target material. An example of a precursor can be a solution of silver salts or a colloid of silver nanoparticles. The melt is understood to be the liquid phase of the target material associated with its heating above the melting temperature. With a sufficient mechanical strength of the laced structure being obtained it can be completely or partially mechanically separated from the first or second substrates described herein. We claim a possibility of such a separation, for example, by mechanical capturing one edge of the laced structure followed by the mechanical separation of the remaining part of the structure from the substrate. The free mesh structure obtained by the aforesaid method can be used as a membrane, mesh electrode, catalytic structure etc.

In one or more embodiments, for all the synthesis methods of the final laced structure using the aforesaid template there is a correspondence of the shape of the obtained paths and the space between them to the initial shape of the fractures and template clusters. However, as would be appreciated by persons of ordinary skill in the art, the geometrical dimensions of the elements of the final structure and initial template may not be the same (though, the dislocation periods for the template and structure elements always coincide).

In one or more embodiments, there are no specific requirements to the nature and properties of the target material to form the final laced structure using the aforesaid template. This can be a single- or multi-component (specifically, composite) conductive or non-conductive material. In the specific case, a composite material can be used comprising conductive nano-particles or carbon nanotubes or conductive nanorods (nanowires) distributed in a template, specifically, in a template fabricated from a conductive polymer.

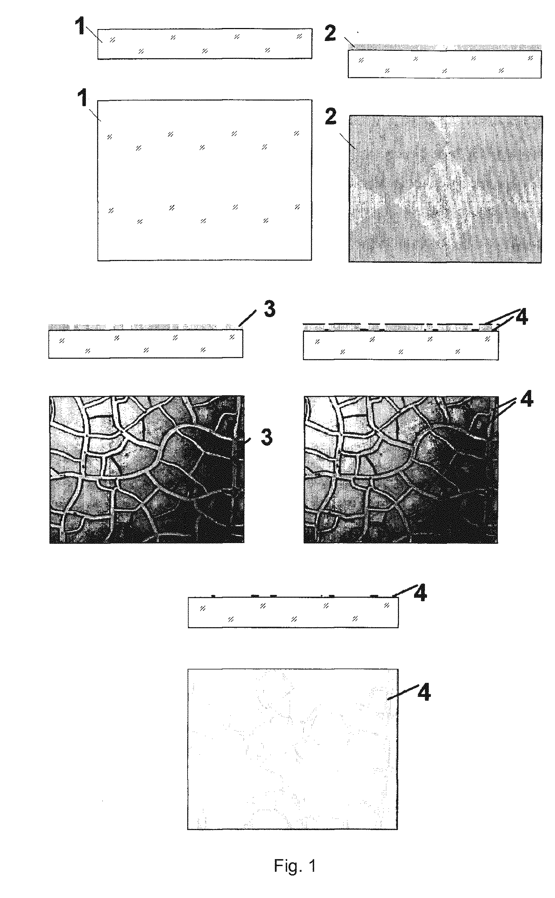

Certain specific exemplary embodiments will now be described in detail. In a first exemplary embodiment of the invention, a layer of the material 2, which is in the form of aqueous latex suspension, is deposited on the glass substrate 1 (Fig. 1). Upon drying, the aforesaid layer forms a percolated fracture system 3. Further, using the method of vacuum deposition a layer of metal 4 is deposited on the substrate prepared by the method described herein or a layer of silver or copper is deposited by the reaction of silver or copper mirror or by the deposition of silver or copper nanoparticles from the solution. The deposition of the aforesaid copper or silver layers 4 is implemented so that their thickness should be, for example, 90nm. Further, a procedure of the removing the latex layer 2, for example, is implemented by treating the substrate with acetone. Here, the only part of the metal coating, which remains on the glass surface is the one previously located in the fractures 3. As a result, the glass substrate is covered by a uniform mesh of metallic paths separated by windows. The contact resistance between the paths is absent (the paths are a part of the laced structure obtained from the uniform metallic layer). The surface resistivity of such a coating, depending on the parameters of the initial template (first of all, depending on the cluster size and fracture width), can amount from unities to tens ohm/square at a transparency from 80% to 95% and higher. The obtained structure can function as an optically transparent conductive coating.

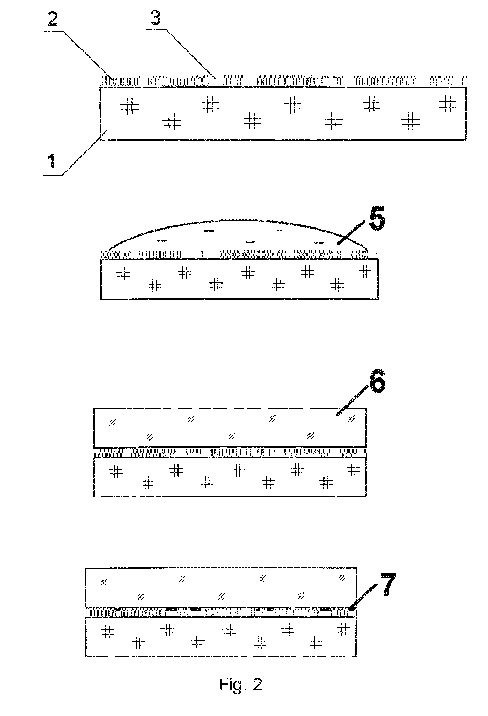

In a second exemplary embodiment of the invention, a layer of the material 2 in the form of an aqueous suspension of latex is deposited on a porous substrate 1 (Fig. 2). Upon drying, the aforesaid layer forms a percolated system of fractures 3. Further, a layer of the liquid precursor 6 in the form of a solution of silver salts is deposited over layer 2. The second substrate 7 is pressed to layer 2 so that the excess of the liquid precursor 6 should be displaced and the precursor should mainly remain in the area of fractures 3. Further, the layer of silver 8 is deposited from the precursor 6 on the second substrate 7 by heating the second substrate 7. The second substrate 7 with the silver paths 8 deposited on it can be considered to be the final product. The porosity of the first substrate provides the absorption of a part of the precursor 6, thereby the first substrate operates as an additional volume for the precursor. Due to this fact, the exchange takes place between the precursor located in the area of fractures 3 and the precursor soaked in the substrate. It allows compensating the precursor depletion, which occurs upon the deposition of the target material from it (in this case - silver) which, in turn, allows depositing a thicker layer of the target material (in this case - the layer of silver 8).

In a third second exemplary embodiment of the invention, a layer of the material 2 in the form of an aqueous suspension of latex is deposited on the substrate 1 (Fig. 2). Upon drying, the aforesaid layer forms a percolated system of fractures 3 Further, a layer in the form of a liquid polymer 6 is deposited over layer 2. The second substrate 7 is pressed to layer 2 so that the excess of the liquid melt 6 should be displaced and the melt should mainly remain in the area of fractures 3. Then, the liquid melt 6 is solidified, forming a polymer mesh wherein the geometry of the paths corresponds to the fracture geometry of the initial template. Depending on the ratio of the adhesion forces of the polymer to the first substrate 1 and the second one 7, upon breaking the mechanical contact of the substrates between each other the polymer mesh remains either on the first substrate or on the second one. The polymer micro- or nanostructure described herein may be used as a layer for superhydrophobic coatings (the application of self-cleaning coatings) or when freed from the substrates or transferred to a porous substrate as a selective or base layer for a membrane obtained by using the aforesaid method; or being implemented from a biocompatible material possessing certain affinity to living cells, it can be applied as a biomimetic coating etc.

It should be noted that other implementations of the invention will be apparent to those skilled in the art from consideration of the specification and practice of the invention disclosed herein. Various aspects and/or components of the described embodiments may be used singly or in any combination in the apparatus and method for producing micro- and nanostructured coatings. It is intended that the specification and examples be considered as exemplary only, with a true scope and spirit of the invention being indicated by the following claims.

## Claims

1. A method for producing a mesh micro- and nanostructure, the method comprising:
a. forming a layer of a material on a substrate, this material breaking into the clusters upon occurrence of a predetermined chemical or a physical reaction;
b. causing the layer of material to break into clusters using chemical and/or physical reaction;
c. using the layer of the material broken into the clusters as a template to define a geometry of the micro- and nanostructure.

2. The method according to claim 1, wherein in c., the layer of the material broken into the clusters is used as a template to define a geometry of the micro- and nanostructure on the surface of the substrate or on a second surface of a second substrate, the mesh structure being mechanically separate from the surface of the substrate.

3. The method according to claim 1, wherein in c., the layer of the material broken into the clusters is used as a template to define a geometry of the micro- and nanostructure, wherein a conductive or dielectric layer is formed over the layer of the material broken into the clusters and subsequently completely or partially removing the layer of the material broken into the clusters.

4. The method according to claim 3, wherein in c., the conductive or dielectric layer is formed using a vacuum deposition or a deposition from a melt or a liquid or a gas phase deposition and wherein the layer of the material broken into the clusters is removed using etching or by thermal or mechanical action.

5. The method according to claim 1, wherein c. comprises:
i. forming a second layer of a liquid precursor or a melt over the layer of the material broken into the clusters;
ii. bringing the layer of the material broken into the clusters into a contact with the second layer,
iii. displacing an excess of the liquid precursor or melt, and
iv. transforming the liquid precursor into the target structure.

6. The method according to claim 5, wherein the surface of the substrate to be used for the aforesaid layer formation is porous and wherein the porous surface of the substrate absorbs at least a portion of the liquid precursor or the melt.

7. The method according to claim 5, wherein the liquid precursor comprises a solution of silver salts or a colloid of silver nanoparticles.

8. The method according to claim 3, wherein the layer of the material comprises additional layers or materials affecting the deposition of the conductive or dielectric layer by blocking or hindering the deposition of the conductive or dielectric layer.

9. The method according to claim 1, wherein c. comprises performing a galvanic deposition of a conductive layer in the gaps separating the clusters in the layer of the material.

10. The method according to claim 1, wherein c. comprises establishing a mechanical contact of the substrate with the second substrate to transfer the template or the mesh micro- and nanostructure onto the second substrate.

11. The method according to claim 1, wherein c. comprises depositing additional layers and subsequently forming a second layer of a second material of the mesh structure over or between the deposited additional layers.

12. The mesh micro- and nanostructure produced using the method according to claim 1, further comprising a conductive or dielectric layer in a form of a uniform laced structure, wherein the uniform laced structure corresponds to a geometry of the gaps in the material broken into the clusters.

13. The mesh structure according to claim 12, wherein the laced structure comprises a metal or a conductive metal oxide deposited from a melt, liquid or gaseous phase or by a vacuum deposition.

14. The mesh structure according to claim 12, wherein the laced structure comprises a composite material comprising conductive nanoparticles or carbon nanotubes or conductive nanorods distributed in the template, specifically, in the template implemented from a conductive polymer.

15. The mesh structure according to claim 12, wherein the laced structure is attached to the substrate and wherein the substrate is a porous or optically transparent.

16. The mesh structure according to claim 12, wherein the laced structure is partially or completely separate from the substrate.
